# EUROPÄISCHE PATENTSCHRIFT

(11) **EP 1 253 300 B1**
(45) Veröffentlichungstag und Bekanntmachung des Hinweises auf die Patenterteilung: **09.02.2005**
(21) Anmeldenummer: 02007536.2
(22) Anmeldetag: 03.04.2002
(51) Int. Cl.: F01N 3/023, F01N 3/035

(54) **Abgasreinigungsanlage mit Partikelfiltermittel und Regenerationsverfahren für Partikelfiltermittel**
Exhaust gas cleaning device having particulate filter means and method of regeneration for the filter means
Dispositif de purification des gaz d'échappement avec moyens de filtration et procédé de regénération pour les moyens de filtration

(30) Priorität: 27.04.2001 DE 10120973
(43) Veröffentlichungstag der Anmeldung: 30.10.2002
(73) Patentinhaber: J. Eberspächer GmbH & Co., 73730 Esslingen (DE)
(72) Erfinder: Hauber, Thomas, Dr., 73776 Altbach (DE); Werni, Marcus, 71384 Weinstadt-Schnait (DE); Eberspach, Günter, 72649 Wolfschlugen (DE); Buhmann, Rudolf, 73732 Esslingen (DE)
(74) Vertreter: Bernhard, Uwe

(56) Entgegenhaltungen:
- EP-A- 0 341 832
- EP-A- 0 758 713
- EP-A- 0 835 684

## Beschreibung

Die Erfindung betrifft eine Abgasreinigungsanlage für eine Brennkraftmaschine, insbesondere eines Kraftfahrzeugs, mit den Merkmalen des Oberbegriffs des Anspruchs 1. Die Erfindung betrifft außerdem ein Verfahren zum Regenerieren von Partikelfiltermitteln einer Katalysator-Filter-Anordnung für Abgase einer Brennkraftmaschine, insbesondere eines Kraftfahrzeugs, mit den Merkmalen des Oberbegriffs des Anspruchs 13.

Eine derartige Abgasreinigungsanlage sowie ein zugehöriges Betriebsverfahren sind aus der EP 0 758 713 bekannt. Dabei umfasst die Abgasreinigungsanlage eine Katalysator-Filter-Anordnung mit Katalysatormitteln, die zumindest ab einer Anspringtemperatur kontinuierlich NO in NO₂ umwandeln, und mit Partikelfiltermitteln, die Partikel aus dem Abgas herausfiltern und bei denen unter Umwandlung von NO₂ in NO die herausgefilterten Partikeln verbrennen. Die Abgasreinigungsanlage umfasst außerdem eine Heizeinrichtung, die stromauf der Katalysator-Filter-Anordnung angeordnet ist und zum Aufheizen der in die Katalysator-Filter-Anordnung eintretenden Abgase dient, sowie eine Steuerung zur Aktivierung der Heizeinrichtung. Bei der bekannten Abgasreinigungsanlage wird das Partikelfilter bedarfsabhängig periodisch, also diskontinuierlich regeneriert. Zwar kann grundsätzlich auch eine permanente oder kontinuierliche Regeneration stattfinden, jedoch kommt es in der Regel nicht dazu, da die Abgastemperaturen hierzu regelmäßig zu niedrig sind. Dementsprechend iniziiert die Steuerung bedarfsabhängig die periodische Regeneration des Partikelfilters.

Aus der EP 0 341 832 B1 und aus der WO 99/09307 ist es für Dieselmotoren bekannt, das Partikelfilter kontinuierlich zu regenerieren. Dabei wird davon ausgegangen, dass bei diesen Dieselmotoren die Abgastemperaturen stets oder hinreichend oft oberhalb der Anspringtemperatur des Katalysators liegen. Dies ist bei älteren Dieselmotoren durchaus der Fall, tritt jedoch bei modernen Dieselmotoren nicht oder nur noch selten auf.

Aus der JP 08-338229 vom 15.06.1995 ist eine Abgasreinigungsanlage für einen Dieselmotor bekannt. In einem Abgasstrang des Dieselmotors sind in dieser Reihenfolge eine Brennstoffzuführung, ein elektrisches Heizgerät, ein Oxidationskatalysator und ein Partikelfilter angeordnet. Der Oxidationskatalysator und/oder der Partikelfilter ist mit einem NOₓ-Speichermittel versehen, das bei einer niedrigen Abgastemperatur NO speichert und bei einer hohen Abgastemperatur NO₂ freigibt. Bei niedrigen Abgastemperaturen wird das Partikelfilter mit Partikeln und das NOₓ-Speichermittel mit NO beladen. Sobald ein vorbestimmter Beladungszustand für das Partikelfilter und das NOₓ-Speichermittel erreicht ist, werden Brennstoff in das Abgas eingeleitet und das Heizgerät aktiviert. Hierdurch kommt es zu einer stark exothermen Reaktion, die das Abgas erhitzt. Dies ermöglicht ein im wesentlichen vollständiges, rasches Abbrennen der im Partikelfilter gespeicherten Partikel. Da das Abbrennen der Partikel somit im Vergleich zum Beladevorgang des Partikelfilters in einer vergleichsweise kurzen Zeit stattfindet, handelt es sich beim Regenerationsprozeß insoweit um eine diskontinuierliche Vorgehensweise.

Aus der EP 0 532 031 B1 ist es bekannt, in einem Abgasstrang stromauf eines Partikelfilters einen Brenner anzuordnen, der mit einem Brennstoff betreibbar ist, wobei eine Brennkammer des Brenners vom Abgas durchströmt wird. Das Partikelfilter filtert auch hier Partikel, z.B. Ruß, aus den Abgasen heraus und speichert diese. Sobald das Partikelfilter einen vorbestimmten Beladungszustand besitzt, wird der Brenner aktiviert, um die Abgase auf eine relativ hohe Abbrenntemperatur aufzuheizen. Üblicherweise liegt diese Temperatur etwa bei 550° C oder 600°C. Die Partikel werden dabei im wesentlichen vollständig verbrannt, so daß das Partikelfilter nach dem Abbrennvorgang wieder neu beladen werden kann. Auch hier handelt es sich eindeutig um ein diskontinuierliches Verfahren zum Regenerieren des Partikelfilters.

Aus der EP 1 057 983 A1 ist eine Abgasreinigungsanlage bekannt, die in einem Abgasstrang in dieser Reihenfolge nacheinander einen 3-Wege-Katalysator, einen HC-Speicher, einen elektrisch beheizbaren Katalysator und einen NOₓ-Speicher aufweist. Beim Kaltstart der Brennkraftmaschine wird der elektrisch beheizbaren Katalysator aktiviert, um die Abgastemperatur soweit zu erhöhen, daß der NOₓ-Speicher aktiviert wird. Im Normalbetrieb der Brennkraftmaschine kann mit dem elektrisch beheizbaren Katalysator die Abgastemperatur erhöht werden, um so die Speicherfähigkeit des NOₓ-Speichers zu steigern.

Die vorliegende Erfindung beschäftigt sich mit dem Problem, für eine Abgasreinigungsanlage sowie für ein Regenerationsverfahren der eingangs genannten Art eine Möglichkeit aufzuzeigen, die mit einem relativ geringen Aufwand, insbesondere an Energie, zur Regeneration der Partikelfiltermittel auskommt.

Dieses Problem wird erfindungsgemäß durch eine Abgasreinigungsanlage mit den Merkmalen des Anspruchs 1 sowie durch ein Verfahren mit den Merkmalen des Anspruchs 13 gelöst.

Die Erfindung beruht auf dem allgemeinen Gedanken, eine Heizeinrichtung, die einer Katalysator-Filter-Anordnung vorgeschaltet ist, zur Regeneration von Partikelfiltermitteln dieser Katalysator-Filter-Anordnung so anzusteuern, daß sich die Abgastemperatur der in die Katalysator-Filter-Anordnung eintretenden Abgase oberhalb einer Anspringtemperatur befindet, bei der Katalysatormittel der Katalysator-Filter-Anordnung NO kontinuierlich in NO₂ umwandeln. Diese Anspringtemperatur ist relativ niedrig und liegt beispielsweise bei etwa 250° C. Dies hat zur Folge, daß zur Regeneration der Partikelfiltermittel über die Heizeinrichtung entsprechend weniger Energie zugeführt werden muß als bei einer anderen Regenerationsmethode. Die Erfindung nutzt dabei die Erkenntnis, daß die in den Partikelfiltermitteln zurückgehaltenen Partikel, insbesondere Rußpartikel, unter Umwandlung NO₂ in NO verbrennen. Sofern sich die Abgastemperatur oberhalb der Anspringtemperatur befindet, findet somit eine kontinuierliche oder permanente Regeneration der Partikelfiltermittel statt bzw. es kommt erst gar nicht zu einer Beladung der Partikelfiltermittel mit Partikeln. Insoweit ermöglicht die Erfindung auch bei einem Dieselmotor, der zumindest im Normalbetrieb Abgase mit sehr niedrigen Temperaturen erzeugt, eine kontinuierliche Regeneration der Partikelfiltermittel, da mit Hilfe der Heizeinrichtung die Abgase bedarfsabhängig bis auf die Anspringtemperatur aufgeheizt werden können.

Durch eine entsprechende Betätigung der Heizeinrichtung kann zur Regeneration der Partikelfiltermittel die Abgastemperatur etwa auf die Anspringtemperatur oder auf eine Temperatur eingeregelt werden, die geringfügig höher ist als die Anspringtemperatur. Hierdurch wird gewährleistet, daß die kontinuierliche Regeneration mit einem sehr geringen Energieaufwand stattfinden kann.

Entsprechend einer bevorzugten Ausführungsform wird die Heizeinrichtung aktiviert, wenn die Abgastemperatur der in die Katalysator-Filter-Anordnung eintretenden Abgase kleiner ist als die Anspringtemperatur und wenn außerdem ein Filterregenerationsbetrieb aktiviert ist, wobei dieser Filterregenerationsbetrieb aktiviert wird, wenn die Partikelfiltermittel einen vorbestimmten oberen Beladungsgrad aufweisen, und wobei der Filterregenerationsbetrieb deaktiviert wird, wenn die Partikelfiltermittel einen vorbestimmten unteren Beladungsgrad aufweisen. Durch diese Maßnahmen wird für Motorbetriebsphasen, in denen die Abgastemperatur über einen längeren Zeitraum unterhalb der Anspringtemperatur liegt, erreicht, daß sich die Partikelfiltermittel zunächst bis zu einem bestimmten oberen Beladungsgrad mit Partikeln zusetzen. Die Zufuhr zusätzlicher Energie durch die Betätigung der Heizeinrichtung erfolgt erst dann, wenn eine Regeneration der Partikelfiltermittel zwingend erforderlich ist. Hierdurch kann Energie gespart werden. Bemerkenswert ist hierbei, daß die erfindungsgemäß durchgeführte Regeneration der Partikelfiltermittel auch bei aktiviertem Filterregenerationsbetrieb als kontinuierlich ablaufender Vorgang ausgebildet ist, der nur eine geringe Temperaturerhöhung und somit Energiezufuhr benötigt. Desweiteren ergibt sich ein Energieeinsparpotential auch bei einem Motorbetrieb mit Zuständen, bei denen die Abgastemperatur mal oberhalb und mal unterhalb der Anspringtemperatur liegt. Bei einem derartigen Betrieb kann in den Betriebsphasen mit erhöhter Abgastemperatur eine hinreichende Regeneration der Partikelfiltermittel erfolgen, so daß für die Betriebsphasen mit niedriger Abgastemperatur keine Aktivierung der Heizeinrichtung erforderlich ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine schaltplanartige Prinzipdarstellung einer erfindungsgemäßen Abgasreinigungsanlage bei einer ersten Ausführungsform,
- Fig. 2: eine vereinfachte Darstellung der Abgasreinigungsanlage nach Fig. 1,
- Fig. 3: eine Darstellung wie in Fig. 2, jedoch bei einer zweiten Ausführungsform,
- Fig. 4: eine Darstellung wie in Fig. 2, jedoch bei einer dritten Ausführungsform,
- Fig. 5: eine Darstellung wie in Fig. 2, jedoch bei einer vierten Ausführungsform,
- Fig. 6: eine Darstellung wie in Fig. 2, jedoch bei einer fünften Ausführungsform,
- Fig. 7: eine Darstellung wie in Fig. 2, jedoch bei einer sechsten Ausführungsform,
- Fig. 8: eine Darstellung wie in Fig. 2, jedoch bei einer siebten Ausführungsform.

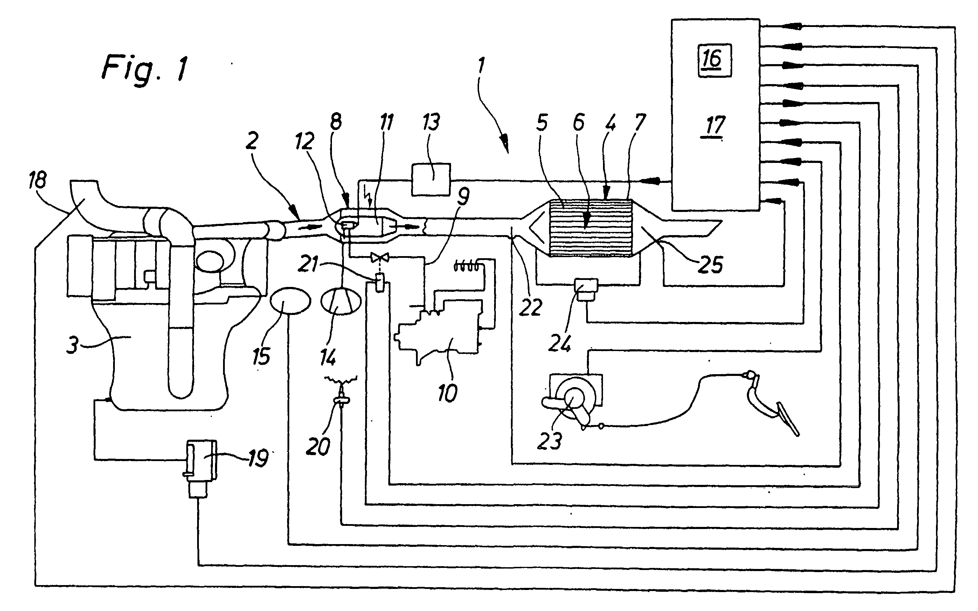

Entsprechend Fig. 1 ist eine erfindungsgemäße Abgasreinigungsanlage 1 in einen Abgasstrang 2 einer Brennkraftmaschine 3, z.B. Dieselmotor oder Ottomotor, insbesondere eines nicht dargestellten Kraftfahrzeugs, angeordnet.

Die Abgasreinigungsaniage 1 weist eine Katalysator-Filter-Anordnung 4 auf, die Katalysatormittel 5 und Partikelfiltermittel 6 umfaßt. Die Katalysatormittel 5 sind so ausgebildet, daß sie als Oxidationskatalysator wirken und zumindest oberhalb einer Anspringtemperatur im Abgas, das die Katalysator-Filter-Anordnung 4 durchströmt, kontinuierlich NO in NO₂ umwandeln. Die Partikelfiltermittel 6 sind so ausgebildet, daß sie Partikel, insbesondere Rußpartikel, die im Abgas der Brennkraftmaschine 3 transportiert werden, bei der Durchströmung der Katalysator-Filter-Anordnung 4 aus dem Abgas herausfiltern, wobei sich eine Beladung der Partikelfiltermittel 6 ergeben kann. Die in den Partikelfiltermitteln 6 abgeschiedenen Partikel können unter Umwandlung von NO₂ in NO verbrennen. Beim Verbrennen der Partikel nimmt der Beladungsgrad der Partikelfiltermittel 6 wieder ab.

Bei der speziellen Ausführungsform der Fig. 1 ist die Katalysator-Filter-Anordnung 4 als katalytisches Partikelfilter 7 ausgebildet, das heißt durch ein Partikelfilter 7, dessen Partikelfiltermittel 6 mit den Katalysatormitteln 5 beschichtet sind.

Die Abgasreinigungsanlage 1 umfaßt desweiteren eine Heizeinrichtung 8, die stromauf der Katalysator-Filter-Anordnung 4 im Abgasstrang 2 angeordnet ist. Die Heizeinrichtung 8 ist entsprechend einer bevorzugten Ausführungsform als Brenner ausgebildet, der mit einem Brennstoff, vorzugsweise dem Brennstoff der Brennkraftmaschine 3, betreibbar ist, der hier über eine Brennstoffversorgungsleitung 9 von einer Brennstoffpumpe 10 zugeführt wird. Der Brenner 8 besitzt eine Brennkammer 11, die vom Abgas durchströmt und umströmt wird, so daß der Brenner 8 hier als Vollstrombrenner ausgebildet ist. Der Brenner 8 enthält außerdem einen Brennerkopf 12, der mit dem Brennstoff sowie bedarfsabhängig mit Sekundärluft versorgt wird und dessen Zündeinheit über einen Zündgeber 13 betätigbar ist. Die Sekundärluft kann wie hier beispielsweise durch ein Gebläse 14 bereitgestellt werden, das mittels eines Hilfsmotors 15 antreibbar ist. Alternativ kann auch von einem Abgasturbolader auf der Druckseite ein Teilstrom abgezweigt werden.

Die Ausbildung der Heizeinrichtung 8 als mit Brennstoff betreibbarer Brenner ist hierbei von besonderer Bedeutung, denn ein solcher Brenner arbeitet mit einem relativ hohen Wirkungsgrad, so daß die zur Temperaturerhöhung der Abgase erforderliche Energie vergleichsweise gering ist.

Die Abgasreinigungsanlage 1 umfaßt außerdem eine Steuerung 16, die hier in ein Steuergerät 17 der Brennkraftmaschine 3 hardware- und/oder softwaremäßig implementiert ist. Die Steuerung 16 bzw. das Steuergerät 17 ist hierbei verbunden mit dem Zündgeber 13, mit einem ersten Temperatursensor 18 zur Bestimmung der Ansauglufttemperatur, einem Druckmeßgerät 19 zur Bestimmung des Saugrohrdrucks, mit dem Hilfsmotor 15, mit einem Drehzahlgeber 20 zur Bestimmung der Brennkraftmaschinendrehzahl, mit einem in der Brennstoffversorgungsleitung 9 angeordneten Regel-/Taktventil 21, mit einem zweiten Temperatursensor 22 zur Bestimmung der Abgastemperatur am Eingang der Katalysator-Filteranordnung 4, mit einem Fahrpedalgeber 23, mit einem Differenzdruckmeßgerät 24 zur Bestimmung des Druckverlustes zwischen Eingangsseite und Ausgangsseite der Partikelfiltermittel 6 bzw. der Katalysator-Filter-Anordnung 4 und mit einem dritten Temperatursensor 25 zur Bestimmung der Abgastemperatur am Ausgang der Katalysator-Filter-Anordnung.

Erfindungsgemäß arbeitet die Abgasreinigungsanlage 1 wie folgt:

Im Betrieb der Brennkraftmaschine 3 entstehen Abgase, die Partikel, insbesondere Rußpartikel, enthalten. Die Partikelfiltermittel 6 können einen Großteil dieser Partikel aus den Abgasen herausfiltern. Sofern sich die Abgastemperatur oberhalb der Anspringtemperatur befindet, die beispielsweise 250° C betragen kann, wandeln die Katalysatormittel 5 permanent im Abgas enthaltenes NO in NO₂ um. Dieses NO₂ ermöglicht schon bei diesen relativ niedrigen Temperaturen eine Verbrennung der Partikel in den Partikelfiltermitteln 6, wobei NO₂ in NO umgewandelt wird. Solange sich die Abgastemperatur also oberhalb dieser Anspringtemperatur befindet, wird das Partikelfiltermittel 6 permanent regeneriert, ohne daß es zu einer Beladung der Partikelfiltermittel 6 kommt.

Sobald jedoch die Abgastemperaturen unterhalb die Anspringtemperatur sinker, können die Katalysatormittel 5 im wesentlichen kein NO₂ bereitstellen, so daß sich die Partikelfiltermittel 6 allmählich beladen und dementsprechend mehr und mehr mit herausgefilterten Partikeln zusetzen. Mit zunehmender Beladung der Partikelfiltermittel 6 steigt der Durchströmungswiderstand der Partikelfiltermittel 6 und somit der zwischen Eingang und Ausgang der Partikelfiltermittel herrschende Differenzdruck. Ein zu großer Durchströmungswiderstand im Abgasstrang 2 kann die Leistungsfähigkeit und die Funktionsfähigkeit der Brennkraftmaschine 3 beeinträchtigen.

Um dies zu verhindern kann die Steuerung 16 bei einer ersten Ausführungsform der vorliegenden Erfindung die Heizeinrichtung 8 aktivieren, sobald die Abgastemperatur im Abgasstrang 2 stromauf der Abgasreinigungsanlage 1 kleiner ist als die geforderte Anspringtemperatur. Bei deaktivierter Heizeinrichtung 8 kann diese Abgastemperatur mit dem zweiten Temperatursensor 22 bestimmt werden. Die Heizeinrichtung 8 wird dann so betrieben, daß die der Katalysator-Filter-Anordnung 4 zugeführten Abgase eine Temperatur erreichen, die sich etwa auf dem Niveau der Anspringtemperatur oder geringfügig darüber befindet. Dabei kann der zweite Temperatursensor 22 die Führungsgröße einer Temperaturregelung für die Heizeinrichtung 8 liefern. Auf diese Weise wird gewährleistet, daß die Abgastemperatur stets etwa das Niveau der Anspringtemperatur besitzt, so daß permanent eine NO₂-Produktion und somit eine kontinuierliche Regeneration der Partikelfiltermittel 6 stattfinden kann. Eine Beladung, insbesondere ein Zusetzen, der Partikelfiltermittel 6 wird somit verhindert.

Bei einer Variante der vorliegenden Erfindung wird zusätzlich zur Abgastemperatur der Beladungszustand der Partikelfiltermittel 6 überwacht. Dieser Beladungszustand korreliert mit der Druckdifferenz zwischen Eingang und Ausgang der Partikelfiltermittel 6, so daß die durch das Differenzdruckmeßgerät 24 ermittelte Druckdifferenz zur Ermittlung des Beladungszustands der Partikelfiltermittel 6 herangezogen werden kann. Die Steuerung 16 ist dann so ausgebildet, insbesondere programmiert, daß sie bei Abgastemperaturen unterhalb der Anspringtemperatur die Heizeinrichtung 8 erst dann aktiviert, wenn die Partikelfiltermittel 6 einen kritischen Beladungszustand erreicht haben. Dies wird dadurch erreicht, daß die Steuerung 16 bei erreichen eines vorbestimmten Beladungsgrades der Partikelfiltermittel einen Filterregenerationsbetrieb aktiviert und die Heizeinrichtung 8 erst dann aktiviert, wenn einerseits die Abgastemperatur unterhalb der gewünschten Anspringtemperatur liegt und andererseits der Filterregenerationsbetrieb aktiviert ist. Das heißt, daß erst bei Vorliegen dieser beiden Bedingungen die zuvor beschriebene Temperaturregelung der Heizeinrichtung 8 durchgeführt wird, welche die Abgastemperatur etwa auf das Niveau der Anspringtemperatur einregelt. Demnach wird auch bei diesem Regenerationsverfahren, das den Beladungszustand der Partikelfiltermittel 6 berücksichtigt, eine kontinuierliche Regeneration durchgeführt, die auf einem relativ niedrigen Temperaturniveau stattfindet und daher mit einer geringen Energiezufuhr auskommt.

Bei aktiviertem Filterregenerationsbetrieb wird somit der Zustand geschaffen, der bei der weiter oben beschriebenen ersten Variante des Regenerationsverfahrens vorliegt. Der kontinuierliche Filterregenerationsbetrieb wird erst dann wieder deaktiviert, wenn die Partikelfiltermittel 6 einen vorbestimmten unteren Beladungsgrad aufweisen, wobei der untere Beladungsgrad erheblich kleiner ist als der obere Beladungsgrad.

Bei einer Weiterbildung kann die Steuerung 16 auch so ausgebildet sein, daß sie die Heizeinrichtung 8 auch zur Regeneration des Katalysatormittels 5 betätigen kann. Hierzu kann es erforderlich sein, die Abgase zumindest kurzzeitig auf ein höheres Temperaturniveau, z.B. 350° C, anzuheizen. Insbesondere kann die Steuerung 16 die Heizeinrichtung 8 zur Beseitigung und/oder zur Verhinderung einer Schwefelvergiftung der Katalysatormittel 5 betätigen. Zur Regeneration der Katalysatormittel 5 sind dann besonders hohe Abgastemperaturen, z.B. 750° C, erforderlich.

Üblicherweise wird die Steuerung 16 die Heizeinrichtung 8 im Betrieb der Brennkraftmaschine 3 aktivieren. Ebenso kann es bei einer besonderen Ausführungsform vorgesehen sein, daß die Steuerung 16 die Heizeinrichtung 8 und somit den Regenerationsbetrieb der Partikelfiltermittel 6 auch dann aktiviert, wenn die Brennkraftmaschine 3 stillsteht. Auf diese Weise kann ein begonnenes Regenerationsverfahren auch bei Stillstand der Brennkraftmaschine 3 beendet werden.

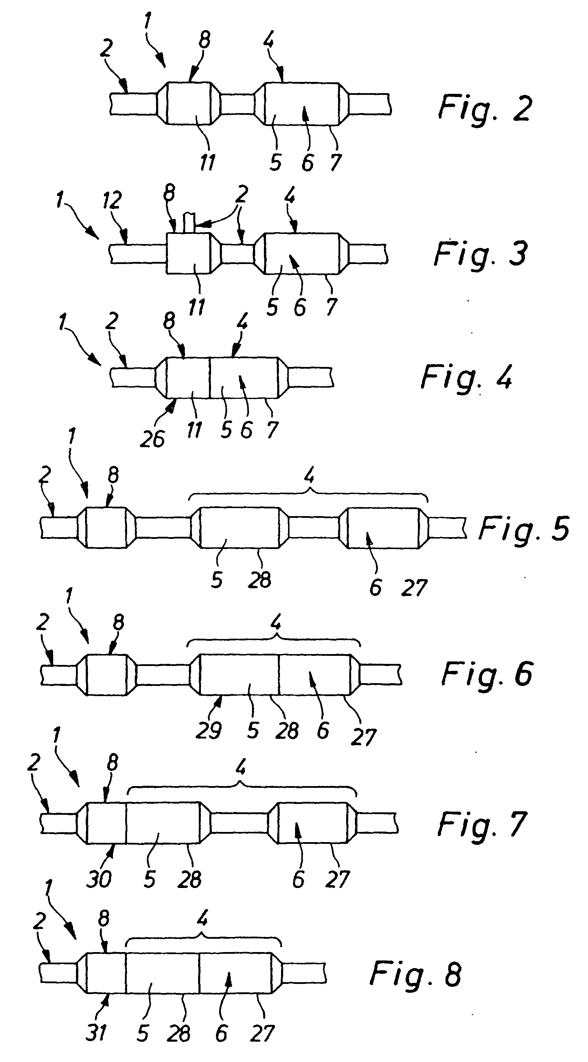

In den Fig. 2 bis 8 sind verschiedene Bauweisen für die Abgasreinigungsanlage 1 nach der Erfindung dargestellt. Der Aufbau gemäß Fig. 2 entspricht dabei dem in Fig. 1 dargestellten Aufbau, bei dem die Katalysator-Filter-Anordnung 4 und die Heizeinrichtung 8 separate Komponenten bilden, die auch separat in den Abgasstrang 2 eingebaut sind. Dabei ist in Fig. 2 die Katalysator-Filter-Anordnung 4 durch das katalytische Partikelfilter 7 gebildet, dessen Partikelfiltermittel 6 mit den Katalysatormitteln 5 beschichtet sind.

Die Ausführungsform gemäß Fig. 3 unterscheidet sich von der in Fig. 2 gezeigten durch eine andere Konfiguration der Heizeinrichtung 8. Während bei Fig. 2 die Brennkammer 11 axial von den Abgasen durchströmt ist, strömen die Abgase bei der Ausführungsform gemäß Fig. 3 radial in die Brennkammer 11 ein und treten axial aus dieser aus. Die Brennereinheit 12 ist seitlich axial an die Brennkammer 11 angeschlossen.

Ebenso ist eine Anordnung möglich, bei der auch die Brennereinheit 12 seitlich radial an die Brennkammer 11 angeschlossen ist. Desweiteren kann auch die Abgaszuführung über den Abgasstrang 2 axial erfolgen, während die Brennereinheit 12 seitlich radial an die Brennkammer 11 angeschlossen ist.

Bei den Ausführungsformen der Fig. 4 bis 8 entspricht die Konfiguration der Heizeinrichtung 8 der in Fig. 2 gezeigten, ebenso ist es möglich, die in Fig. 3 gezeigte Konfiguration zu verwenden.

Bei der Ausführungsform gemäß Fig. 4 bilden die Katalysator-Filter-Anordnung 4, also das katalytische Partikelfilter 7 und die Heizeinrichtung 8 eine Einheit, die in einem gemeinsamen Gehäuse 26 untergebracht ist.

Bei den Ausführungsformen der Fig. 5 bis 8 ist die Katalysator-Filter-Anordnung 4 jeweils durch ein Partikelfilter 27 und einen stromauf dazu angeordneten Katalysator 8 gebildet. Während das Partikelfilter 27 die Partikelfiltermittel 6 enthält, weist der Katalysator 28 die Katalysatormittel 5 auf.

Gemäß Fig. 5 können Heizeinrichtung 8, Katalysator 28 und Partikelfilter 27 jeweils eine separate Komponente bilden, die getrennt voneinander im Abgasstrang 2 angeordnet sind.

Gemäß Fig. 6 bilden bei dieser Variante Katalysator 28 und Partikelfilter 27 eine Einheit, die in einem gemeinsamen Gehäuse 29 untergebracht ist. Die Heizeinrichtung 8 ist dazu separat im Abgasstrang 2 angeordnet.

Bei der Variante gemäß Fig. 7 bilden die Heizeinrichtung 8 und der Katalysator 28 eine Einheit, die in einem gemeinsamen Gehäuse 30 untergebracht ist. Hierbei ist das Partikelfilter 27 separat dazu im Abgasstrang 2 angeordnet.

Schließlich zeigt Fig. 8 eine Variante, bei der die Heizeinrichtung 8, der Katalysator 28 und das Partikelfilter 27 eine Einheit bilden, die in einem gemeinsamen Gehäuse 31 untergebracht und im Abgasstrang 2 angeordnet ist.

### Bezugszeichenliste

- 1: Abgasreinigungsanlage
- 2: Abgasstrang
- 3: Brennkraftmaschine
- 4: Katalysator-Filter-Anordnung
- 5: Katalysatormittel
- 6: Partikelfiltermittel
- 7: katalytisches Partikelfilter
- 3: Heizeinrichtung
- 9: Brennstoffversorgungsleitung
- 10: Brennstoffpumpe
- 11: Brennkammer
- 12: Brennereinheit
- 13: Zündgeber
- 14: Gebläse
- 15: Hilfsmotor
- 16: Steuerung
- 17: Steuergerät
- 18: erster Temperatursensor
- 19: Druckmeßgerät
- 20: Drehzahlgeber
- 21: Regel-/Taktventil
- 22: zweiter Temperatursensor
- 23: Fahrpedalgeber
- 24: Differenzdruckmeßgerät
- 25: dritter Temperatursensor
- 26: Gehäuse
- 27: Partikelfilter
- 28: Katalysator
- 29: Gehäuse
- 30: Gehäuse
- 31: Gehäuse

## Patentansprüche

1. Abgasreinigungsanlage für eine Brennkraftmaschine (3), insbesondere eines Kraftfahrzeugs, umfassend
- eine Katalysator-Filter-Anordnung (4)
-- mit Katalysatormitteln (5), die zumindest ab einer Anspringtemperatur kontinuierlich NO in NO₂ umwandeln,
-- mit Partikelfiltermitteln (6), die Partikel aus dem Abgas herausfiltern und bei denen unter Umwandlung von NO₂ in NO die herausgefilterten Partikel verbrennen,
- eine Heizeinrichtung (8), die stromauf der Katalysator-Filter-Anordnung (4) angeordnet ist und zum Aufheizen der in die Katalysator-Filter-Anordnung (4) eintretenden Abgase dient,
- eine Steuerung (16) zur Aktivierung der Heizeinrichtung (8),
**dadurch gekennzeichnet,**
**dass** die Steuerung (16) die Heizeinrichtung (8) aktiviert, wenn die Abgastemperatur der in die Katalysator-Filter-Anordnung (4) eintretenden Abgase kleiner ist als die Anspringtemperatur, und zum Einregeln einer Abgastemperatur ansteuert, die etwa so groß ist wie oder geringfügig größer ist als die Anspringtemperatur, so dass eine kontinuierliche Regeneration der Partikelfiltermittel (6) stattfindet.

2. Abgasreinigungsanlage nach Anspruch 1,
**dadurch gekennzeichnet,**
**daß** die Steuerung (16) die Heizeinrichtung (8) aktiviert, wenn die Abgastemperatur der in die Katalysator-Filter-Anordnung (4) eintretenden Abgase kleiner ist als die Anspringtemperatur und wenn ein Filterregenerationsbetrieb aktiviert ist, wobei der Filterregenerationsbetrieb aktiviert wird, wenn die Partikelfiltermittel (6) einen vorbestimmten oberen Beladungsgrad aufweisen, und deaktiviert wird, wenn die Partikelfiltermittel (6) einen vorbestimmten unteren Beladungsgrad aufweisen.

3. Abgasreinigungsanlage nach Anspruch 2,
**dadurch gekennzeichnet,**
**dass** der Beladungsgrad aus einem Wert ermittelt wird, der mit einem Druckabfall zwischen Eingangsseite und Ausgangsseite der Partikelfiltermittel (6) korreliert.

4. Abgasreinigungsanlage nach einem der Ansprüche 1 bis 3,
**dadurch gekennzeichnet,**
**dass** die Steuerung (16) die Heizeinrichtung (8) zur Regeneration der Katalysatormittel (5) betätigt.

5. Abgasreinigungsanlage nach einem der Ansprüche 1 bis 4,
**dadurch gekennzeichnet,**
**dass** die Steuerung (16) die Heizeinrichtung (8) zur Beseitigung und/oder zur Verhinderung einer Schwefelvergiftung der Katalysatormittel (5) betätigt.

6. Abgasreinigungsanlage nach einem der Ansprüche 1 bis 5,
**dadurch gekennzeichnet,**
**dass** die Steuerung (16) die Heizeinrichtung (8) beim Betrieb der Brennkraftmaschine (3) und/oder bei Stillstand der Brennkraftmaschine (3) aktiviert.

7. Abgasreinigungsanlage nach einem der Ansprüche 1 bis 6,
**dadurch gekennzeichnet,**
**dass** Heizeinrichtung (8) und Katalysator-Filter-Anordnung (4) eine Einheit bilden, die in einem gemeinsamen Gehäuse (26; 31) untergebracht ist..

8. Abgasreinigungsanlage nach einem der Ansprüche 1 bis 7,
**dadurch gekennzeichnet,**
**dass** die Katalysator-Filter-Anordnung (4) durch ein Partikelfilter (7) gebildet ist, dessen Partikelfiltermittel (6) mit den Katalysatormitteln (5) beschichtet sind.

9. Abgasreinigungsanlage nach einem der Ansprüche 1 bis 8, **dadurch gekennzeichnet,**
**dass** die Katalysator-Filter-Anordnung aus einem Partikelfilter (27) mit Partikelfiltermitteln (6) und einem stromauf des Partikelfilters (27) angeordneten Katalysator (28) mit Katalysatormitteln (5) besteht.

10. Abgasreinigungsanlage nach Anspruch 9,
**dadurch gekennzeichnet,**
**dass** Heizeinrichtung (8) und Katalysator (28) eine Einheit bilden, die in einem gemeinsamen Gehäuse (30) untergebracht ist.

11. Abgasreinigungsanlage nach Anspruch 9,
**dadurch gekennzeichnet,**
**dass** Katalysator (28) und Partikelfilter (27) eine Einheit bilden, die in einem gemeinsamen Gehäuse (29) untergebracht ist.

12. Abgasreinigungsanlage nach einem der Ansprüche 1 bis 11,
**dadurch gekennzeichnet,**
**dass** die Heizeinrichtung (8) einen Brenner aufweist, der mit einem Brennstoff betreibbar ist und dessen Brennkammer (11) vom Abgas durchströmt ist.

13. Verfahren zum Regenerieren von Partikelfiltermitteln (6) einer Katalysator-Filter-Anordnung (4) für Abgase einer Brennkraftmaschine (3), insbesondere eines Kraftfahrzeugs,
- bei dem Katalysatormittel (5) der Katalysator-Filter-Anordnung (4) zumindest oberhalb einer Anspringtemperatur kontinuierlich NO in NO₂ umwandeln,
- bei dem die Partikelfiltermittel (6) die Partikel aus dem Abgas herausfiltern,
- bei dem die herausgefilterten Partikel unter Umwandlung NO₂ in NO verbrennen,
- bei dem die Abgastemperatur stromauf der Katalysator-Filter-Anordnung (4) gemessen wird,
**dadurch gekennzeichnet,**
**dass** eine Heizeinrichtung (8) aktiviert wird, wenn die gemessene Abgastemperatur unter die Anspringtemperatur sinkt, und zum Einregeln einer Abgastemperatur angesteuert wird, die etwa so groß ist wie oder geringfügig größer ist als die Anspringtemperatur, so dass eine kontinuierliche Regeneration der Partikelfiltermittel (6) stattfindet.

14. Verfahren nach Anspruch 13,
**dadurch gekennzeichnet,**
**dass** die Heizeinrichtung (8) aktiviert wird, wenn die gemessene Abgastemperatur unter die Anspringtemperatur sinkt und wenn ein Filterregenerationsbetrieb aktiviert ist, wobei dieser Filterregenerationsbetrieb aktiviert wird, wenn die Partikelfiltermittel (6) einen vorbestimmten oberen Beladungsgrad aufweisen und deaktiviert wird, wenn die Partikelfiltermittel (6) einen vorbestimmten unteren Beladungsgrad aufweisen.

15. Verfahren nach Anspruch 14,
**dadurch gekennzeichnet,**
**dass** der Beladungsgrad aus einem Wert ermittelt wird, der mit einem Druckabfall zwischen Eingangsseite und Ausgangsseite der Partikelfiltermittel (6) korreliert.

16. Verfahren nach einem der Ansprüche 13 bis 15,
**dadurch gekennzeichnet,**
**dass** die Heizeinrichtung (8) zur Regeneration des Katalysätormittels (5) betätigt wird.

17. Verfahren nach einem der Ansprüche 13 bis 16,
**dadurch gekennzeichnet,**
**dass** die Heizeinrichtung (8) zur Beseitigung und/oder zur Verhinderung einer Schwefelvergiftung der Katalysatormittel (5) betätigt wird.

18. Verfahren nach einem der Ansprüche 13 bis 17,
**dadurch gekennzeichnet,**
**dass** die Heizeinrichtung (8) beim Betrieb der Brennkraftmaschine (3) und/oder bei Stillstand der Brennkraftmaschine (3) aktiviert wird.

## Claims

1. An exhaust cleaning system for an internal combustion engine (3), in particular in a motor vehicle, comprising
- a catalytic converter-filter arrangement (4)
- having catalytic converter means (5) which continuously convert NO to NO₂ at least above an initiation temperature,
- having particulate filter means (6) which filter out particles from the exhaust and burn the filtered-out particles, converting NO₂ into NO,
- a heating apparatus (8) which is arranged upstream from the catalytic converter-filter arrangement (4) and is used to heat the exhaust entering the catalytic converter-filter arrangement (4),
- a control unit (16) for activating the heating apparatus (8),
**characterized in that**
the controller (16) activates the heating apparatus (8) when the exhaust temperature of the exhaust entering the catalytic converter-filter arrangement (4) is lower than the initiation temperature and for regulating an exhaust temperature which is approximately as high as or slightly higher than the initiation temperature so that there is continuous regeneration of the propellant filter means (6).

2. The exhaust cleaning system according to Claim 1,
**characterized in that**
the controller (16) activates the heating apparatus (8) when the exhaust temperature of the exhaust entering the catalytic converter-filter arrangement (4) is lower than the initiation temperature and when a filter regeneration operation is activated, whereby the filter regeneration is activated when the particulate filter means (6) have a predetermined upper degree of loading and is deactivated when the particulate filter means (6) have a predetermined lower degree of loading.

3. The exhaust cleaning system according to Claim 2,
**characterized in that**
the degree of loading is determined from a value correlating with a pressure drop between the inlet and outlet sides of the particulate filter means (6).

4. The exhaust cleaning system according to one of Claims 1 through 3,
**characterized in that**
the controller (16) activates the heating apparatus (8) for regeneration of the catalytic converter means (5).

5. The exhaust cleaning system according to one of Claims 1 through 4,
**characterized in that**
the controller (16) activates the heating apparatus (8) for eliminating and/or preventing sulfur poisoning of the catalytic converter means (5).

6. The exhaust cleaning system according to one of Claims 1 through 5,
**characterized in that**
the controller (16) activates the heating apparatus (8) in operation of the internal combustion engine (3) while it is in operation and/or when the internal combustion engine (3) is stopped.

7. The exhaust cleaning system according to one of Claims 1 through 6,
**characterized in that**
the heating apparatus (8) and the catalytic converter filter arrangement (4) form a unit which is accommodated in a combined housing (26; 31).

8. The exhaust cleaning system according to one of Claims 1 through 7,
**characterized in that**
the catalytic converter-filter arrangement (4) is formed by a particulate filter (7) in which the particulate filter means (6) are coated with the catalytic converter means (5).

9. The exhaust cleaning system according to one of Claims 1 through 8,
**characterized in that**
the catalytic converter-filter arrangement consists of a particulate filter (27) having particulate filter means (6) and a catalytic converter (28) having catalytic converter means (5) situated upstream from the particulate filter (27).

10. The exhaust cleaning system according to Claim 9,
**characterized in that**
the heating apparatus (8) and the catalytic converter (28) form a unit which is accommodated in a common housing (30).

11. The exhaust cleaning system according to Claim 9,
**characterized in that**
the catalytic converter (28) and the particulate filter (27) form a unit which is accommodated in a common housing (29).

12. The exhaust cleaning system according to one of Claims 1 through 11,
**characterized in that** the heating apparatus (8) has a burner which can be operated with a fuel and in which exhaust gas flows through the combustion chamber (11).

13. A method for regenerating particulate filter means (6) of a catalytic converter-filter arrangement (4) for exhaust of an internal combustion engine (3), in particular a motor vehicle,
- in which catalytic converter means (5) of the catalytic converter filter arrangement (4) continuously convert NO into NO₂ at least above an initiation temperature,
- in which the particulate filter means (6) filter out the particles from the exhaust,
- in which the particles that are filtered out are burned, thereby converting NO₂ into NO,
- in which the exhaust temperature is measured upstream from the catalytic converter-filter arrangement,
**characterized in that**
a heating apparatus (8) is activated when the measured exhaust temperature drops below the initiation temperature and is triggered for regulating an exhaust temperature which is approximately as high as or slightly higher than the initiation temperature, so that the particulate filter means (6) are regenerated continuously.

14. The method according to Claim 13,
**characterized in that**
the heating apparatus (8) is activated when the measured exhaust temperature drops below the initiation temperature and when the filter regeneration operation is activated, whereby this filter regeneration operation is activated when the particulate filter means (6) have a predetermined upper degree of loading and is deactivated when the particulate filter means (6) have a predetermined lower degree of loading.

15. The method according to Claim 14,
**characterized in that**
the degree of loading is determined from a value correlating with a pressure drop between the inlet and outlet sides of the particulate filter means (6).

16. The method according to one of Claims 13 through 15,
**characterized in that**
the heating apparatus (8) is operated for regeneration of the catalytic converter means (5).

17. The method according to one of Claims 13 through 16,
**characterized in that**
the heating apparatus (8) is operated to eliminate and/or prevent sulfur poisoning of the catalytic converter means (5).

18. The method according to one of Claims 13 through 17,
**characterized in that**
the heating apparatus (8) is activated during operation of the internal combustion engine (3) or when the internal combustion engine (3) is stopped.

## Revendications

1. Dispositif de purification des gaz d'échappement pour un moteur à combustion interne (3), en particulier d'un véhicule à moteur, comprenant
- un dispositif catalyseur-filtre (4)
-- muni de moyens catalyseurs (5) qui au moins à partir d'une température de déclenchement convertissent de manière continue NO en NO₂,
-- et de moyens (6) de filtre à particules qui éliminent par filtration des particules des gaz d'échappement et dans lesquels les particules retenues brûlent avec conversion de NO₂ en NO,
- un dispositif de chauffage (8) qui est disposé en amont du dispositif catalyseur-filtre (4) et sert à chauffer les gaz d'échappement entrant dans le dispositif catalyseur-filtre (4),
- une commande (16) pour activer le dispositif de chauffage (8),
**caractérisé en ce**
**que** la commande (16) active le dispositif de chauffage (8) lorsque la température de gaz d'échappement des gaz d'échappement entrant dans le dispositif catalyseur-filtre (4) est inférieure à la température de déclenchement, et le pilote pour réguler une température de gaz d'échappement qui est sensiblement égale ou légèrement supérieure à la température de déclenchement, de sorte qu'il s'opère une régénération continue des moyens (6) de filtre à particules.

2. Dispositif de purification des gaz d'échappement selon la revendication 1,
**caractérisé en ce**
**que** la commande (16) active le dispositif de chauffage (8) lorsque la température de gaz d'échappement des gaz d'échappement entrant dans le dispositif catalyseur-filtre (4) est inférieure à la température de déclenchement et lorsque le mode de régénération de filtre est activé, le mode de régénération de filtre étant activé lorsque les moyens (6) de filtre à particules présentent un degré de charge supérieur prédéterminé, et étant désactivé lorsque les moyens (6) de filtre à particules présentent un degré de charge inférieur prédéterminé.

3. Dispositif de purification des gaz d'échappement selon la revendication 2,
**caractérisé en ce**
**que** le degré de charge est calculé à partir d'une valeur qui est corrélée avec une chute de pression entre le côté entrée et le côté sortie des moyens (6) de filtre à particules.

4. Dispositif de purification des gaz d'échappement selon l'une des revendications 1 à 3,
**caractérisé en ce**
**que** la commande (16) actionne le dispositif de chauffage (8) pour régénérer les moyens (6) de filtre à particules.

5. Dispositif de purification des gaz d'échappement selon l'une des revendications 1 à 4,
**caractérisé en ce**
**que** la commande (16) actionne le dispositif de chauffage (8) pour éliminer et/ou pour prévenir une contamination par le soufre des moyens catalyseurs (5).

6. Dispositif de purification des gaz d'échappement selon l'une des revendications 1 à 5,
**caractérisé en ce**
**que** la commande (16) active le dispositif de chauffage (8) lorsque le moteur à combustion interne (3) est en service et/ou lorsque le moteur à combustion interne (3) est arrêté.

7. Dispositif de purification des gaz d'échappement selon l'une des revendications 1 à 6,
**caractérisé en ce**
**que** le dispositif de chauffage (8) et le dispositif catalyseur-filtre (4) forment une unité qui est logée dans un carter commun (26 ; 31).

8. Dispositif de purification des gaz d'échappement selon l'une des revendications 1 à 7,
**caractérisé en ce**
**que** le dispositif catalyseur-filtre (4) est formé par un filtre à particules (7) dont les moyens (6) de filtre à particules sont revêtus des moyens catalyseurs (5).

9. Dispositif de purification des gaz d'échappement selon l'une des revendications 1 à 8,
**caractérisé en ce**
**que** le dispositif catalyseur-filtre est constitué d'un filtre à particules (27) comportant des moyens (6) de filtre à particules et d'un catalyseur (28) comportant des moyens catalyseurs (5) disposé en amont du filtre à particules (27).

10. Dispositif de purification des gaz d'échappement selon la revendication 9,
**caractérisé en ce**
**que** le dispositif de chauffage (8) et le catalyseur (28) forment une unité qui est logée dans un carter commun (30).

11. Dispositif de purification des gaz d'échappement selon la revendication 9,
**caractérisé en ce**
**que** lé catalyseur (28) et le filtre à particules (27) forment une unité qui est logée dans un carter commun (29).

12. Dispositif de purification des gaz d'échappement selon l'une des revendications 1 à 11,
**caractérisé en ce**
**que** le dispositif de chauffage (8) présente un brûleur qui peut fonctionner avec un combustible et dont la chambre de combustion (11) est traversée par les gaz d'échappement.

13. Procédé pour régénérer des moyens (6) de filtre à particules d'un dispositif catalyseur-filtre (4) pour des gaz d'échappement d'un moteur à combustion interne (3), en particulier d'un véhicule à moteur,
- dans lequel des moyens catalyseurs (5) du dispositif catalyseur-filtre (4) convertissent de manière continue NO en NO₂ au moins à partir d'une température de déclenchement,
- dans lequel les moyens (6) de filtre à particules éliminent par filtration les particules des gaz d'échappement,
- dans lequel les particules retenues brûlent avec conversion de NO₂ en NO,
- dans lequel la température des gaz d'échappement est mesurée en amont du dispositif catalyseur-filtre (4),
**caractérisé en ce**
**qu'**un dispositif de chauffage (8) est activé lorsque la température de gaz d'échappement des gaz d'échappement mesurée s'abaisse en dessous de la température de déclenchement, et est piloté pour réguler une température de gaz d'échappement qui est sensiblement égale ou légèrement supérieure à la température de déclenchement, de sorte qu'il s'opère une régénération continue des moyens (6) de filtre à particules.

14. Procédé selon la revendication 13,
**caractérisé en ce**
**que** le dispositif de chauffage (8) est activé lorsque la température de gaz d'échappement des gaz d'échappement mesurée s'abaisse en dessous de la température de déclenchement et lorsqu'un mode de régénération de filtre est activé, ce mode de régénération de filtre étant activé lorsque les moyens (6) de filtre à particules présentent un degré de charge supérieur prédéterminé et étant désactivé lorsque les moyens (6) de filtre à particules présentent un degré de charge inférieur prédéterminé.

15. Procédé selon la revendication 14,
**caractérisé en ce**
**que** le degré de charge est calculé à partir d'une valeur qui est corrélée avec une chute de pression entre le côté entrée et le côté sortie des moyens (6) de filtre à particules.

16. Procédé selon l'une des revendications 13 à 15,
**caractérisé en ce**
**que** le dispositif de chauffage (8) est actionné pour régénérer les moyens (6) de filtre à particules.

17. Procédé selon l'une des revendications 13 à 16,
**caractérisé en ce**
**que** le dispositif de chauffage (8) est actionné pour éliminer et/ou pour prévenir une contamination par le soufre des moyens catalyseurs (5).

18. Procédé selon l'une des revendications 13 à 17
**caractérisé en ce**
**que** le dispositif de chauffage (8) est activé lorsque le moteur à combustion interne (3) est en service et/ou lorsque le moteur à combustion interne (3) est arrêté.
